# EUROPEAN PATENT SPECIFICATION

(11) **EP 4 067 655 B1**
(45) Date of publication and mention of the grant of the patent: **08.01.2025**
(21) Application number: 20892135.3
(22) Date of filing: 25.11.2020
(51) Int. Cl.: F04B 39/00, F04B 39/02, F04B 35/04, F16C 3/08, F16C 9/02, F16C 33/10, C10M 101/02, C10M 105/06, C10M 105/32, C10M 129/68, C10M 137/00, C10M 171/00, C10M 171/02, C10M 171/04, C10N 20/02, C10N 20/04, C10N 30/02, C10N 30/06, C10N 40/02, C10N 40/30

(54) **HERMETIC REFRIGERANT COMPRESSOR AND REFRIGERATOR-FREEZER USING THE SAME**
HERMETISCHER KÄLTEMITTELVERDICHTER UND GEFRIER-/KÜHLGERÄT DAMIT
COMPRESSEUR DE RÉFRIGÉRANT HERMÉTIQUE ET APPAREIL DE CONGÉLATION/RÉFRIGÉRATION L'UTILISANT

(30) Priority: 25.11.2019 JP 2019212592
(43) Date of publication of application: 05.10.2022
(73) Proprietor: Panasonic Corporation, Osaka 571-8501 (JP)
(72) Inventor: KAWABATA, Hirotaka, Shiga 525-8555 (JP); HAYASHI, Hiroto, Shiga 525-8555 (JP); GONDO, Masanobu, Shiga 525-8555 (JP)
(74) Representative: Marks & Clerk LLP
(86) International application number: PCT/JP2020/043743
(87) International publication number: WO 2021/106903

(56) References cited:
- WO-A1-2018/101246
- WO-A1-2018/101246
- JP-A- 2000 129 250
- JP-A- 2006 161 712
- JP-A- 2008 297 447
- JP-A- 2009 121 316
- JP-A- 2009 264 134
- JP-A- 2012 111 956
- JP-A- 2017 508 020
- JP-A- 2018 048 649
- JP-A- 2018 083 920
- JP-A- 2018 083 920
- JP-A- H11 293 273

## Description

### Technical Field

The present invention relates to a hermetic refrigerant compressor for use in, for example, a refrigerator or an air conditioner, and also relates to a refrigerator-freezer using the hermetic refrigerant compressor.

### Background Art

In recent years, from the viewpoint of global environment conservation, the development of a high-efficient hermetic refrigerant compressor that uses less fossil fuels has been conducted. For example, in order to achieve high efficiency, it has been proposed to form various films on sliding surfaces of slide members included in the hermetic refrigerant compressor, and to use lubricating oil having a reduced viscosity.

The hermetic refrigerant compressor includes a sealed container in which the lubricating oil is stored. The sealed container also accommodates an electric element and a compression element. The compression element includes, as the slide members, for example, a crankshaft, a piston, and a connecting rod serving as a coupler. A main shaft of the crankshaft and a main bearing, the piston and a bore, a piston pin and the connecting rod, and an eccentric shaft of the crankshaft and the connecting rod, etc., form slide parts with each other.

As one example of the hermetic refrigerant compressor that uses lubricating oil having a reduced viscosity, Patent Literature 1 discloses a reciprocating compressor. In Patent Literature 1, the lubricating oil used in the reciprocating compressor has a kinematic viscosity in the range of 3 mm²/S to 10 mm²/S at 40°C.

If the lubricating oil has a low viscosity, an oil film is not easily formed. In this respect, in the reciprocating compressor (hermetic refrigerant compressor) disclosed by Patent Literature 1, the surfaces of the slide members forming the slide parts are subjected to special treatment to facilitate the formation of an oil film.

Specifically, among the slide members, the piston and the connecting rod are each made of a ferrous sintered material and are steam-treated, and then a steam layer is removed from the surface of the piston by cutting, whereas the connecting rod is subjected to nitriding after being steam-treated, so that even in a case where lubricating oil having a low viscosity is used and an oil film formed thereby is thin, wear or seizing of the piston and the connecting rod is prevented.

Patent Literature 2 discloses a hermetic compressor (hermetic refrigerant compressor), in which the dimensions of the main shaft of a crankshaft and the dimensions of a main bearing are defined to reduce vibration. Specifically, in a case where the length of the main shaft of the crankshaft, i.e., the length of the bearing of a pivotally supporting part of the main bearing (bearing length), is L, and the diameter of the crankshaft (shaft diameter) is D, the bearing length / the shaft diameter ("α" in Patent Literature 2) is less than 2.5 (L / D < 2.5).

### Citation List

### Patent Literature

PTL 1: Japanese Patent No. 5222244
PTL 2: Japanese Laid-Open Patent Application Publication No. 2017-014992
JP 2018-83920 relates to a refrigerating machine oil and composition for refrigerating machines.
WO 2018/101246 relates to a refrigerant compressor.

### Summary of Invention

### Technical Problem

Incidentally, the crankshaft included in a hermetic refrigerant compressor serves as a shaft part of the compression element driven by the electric element, and the shaft part is pivotally supported in a rotatable manner by a bearing part. In order to achieve high efficiency of the hermetic refrigerant compressor, it is conceivable to reduce the sliding area of each of the shaft part and the bearing part (pivotally supporting part). In this case, however, if the sliding area is reduced too much, it adversely causes deterioration in efficiency.

The above-described reciprocating compressor (hermetic refrigerant compressor) disclosed by Patent Literature 1 uses the low-viscosity lubricating oil, which has a kinematic viscosity in the range of 3 mm²/S to 10 mm²/S at 40°C. However, wear resistance to be improved in Patent Literature 1 is the wear resistance of the piston and the connecting rod. Thus, in Patent Literature 1, regarding components pivotally supported by the bearing part, such as the crankshaft, no consideration is given to how to address issues that arise in the case of using lubricating oil having a low viscosity. Moreover, in Patent Literature 1, no consideration is given to reducing the sliding area of the pivotally supported components, such as the crankshaft, to achieve high efficiency.

Meanwhile, in the above-described hermetic compressor disclosed by Patent Literature 2, the bearing length / the shaft diameter is set to less than 2.5 (L / D < 2.5) to reduce vibration. However, Patent Literature 2 describes that in a case where the bearing length / the shaft diameter is less than or equal to 2.0 (L / D ≤ 2.0), a bearing loss increases. That is, Patent Literature 2 discloses that if L / D ≤ 2.0, the sliding area is reduced too much, which causes increase in the bearing loss, resulting in deterioration in the efficiency of the hermetic compressor.

The present invention has been made to solve the above-described problems. An object of the present invention is to provide a hermetic refrigerant compressor that uses lubricating oil having a reduced viscosity and that makes it possible to achieve high efficiency and favorable reliability even in the case of reducing the sliding area of the shaft part that is pivotally supported by the bearing part.

### Solution to Problem

In order to solve the above-described problems, a hermetic refrigerant compressor according to the present invention includes a sealed container in which lubricating oil is stored, the sealed container accommodating an electric element and a compression element, the compression element being driven by the electric element and configured to compress a refrigerant. The lubricating oil has a kinematic viscosity in a range of 1 mm²/S to 7 mm²/S at 40°C, has a mass average molecular weight in a range of 150 to 400, and contains 0.5% by mass or more of a high molecular weight component. The high molecular weight component has a mass molecular weight of greater than or equal to 500. The compression element includes: a shaft part that is a crankshaft including a main shaft and an eccentric shaft; and a bearing part that pivotally supports the shaft part, the bearing part including a main bearing and an eccentric bearing, the main bearing pivotally supporting the main shaft, the eccentric bearing pivotally supporting the eccentric shaft. The main shaft includes a sliding surface that slides on the main bearing, the sliding surface being divided into a plurality of sliding surfaces. A length of one of the sliding surfaces in the axial direction, the one sliding surface having a least length in the axial direction among the plurality of sliding surfaces, is the single sliding length L. A ratio L / D of the single sliding length L to an external diameter D of the main shaft is less than or equal to 2.0.

According to the above configuration, the ratio L / D of the single sliding length L to the external diameter D is less than or equal to 2.0 and also, even though the lubricating oil used in the hermetic refrigerant compressor has a reduced viscosity, the average molecular weight of the lubricating oil is within a predetermined range, and the lubricating oil contains 0.5% by mass or more of the high molecular weight component whose molecular weight is relatively great. Accordingly, even though the sliding area is reduced such that the ratio L / D is less than or equal to 2.0 and an oil film is formed by the low-viscosity lubricating oil, the oil film can be favorably formed owing to the high molecular weight component. As a result, even with the use of the lubricating oil having a reduced viscosity and the use of the bearing part having a reduced sliding area, the frictional coefficient of the shaft part pivotally supported by the bearing part can be reduced. Consequently, friction at the slide part of the crankshaft can be reduced favorably, which makes it possible to achieve high efficiency and favorable reliability of the hermetic refrigerant compressor.

A refrigerator-freezer according to the present invention includes a refrigerant circuit including: the hermetic refrigerant compressor configured as above; a radiator; a decompressor; and a heat absorber. In the refrigerant circuit, the hermetic refrigerant compressor, the radiator, the decompressor, and the heat absorber are connected by piping in an annular manner.

According to the above configuration, in the hermetic refrigerant compressor, the low-viscosity lubricating oil is used; the sliding area is reduced; and the shaft part has favorable reliability. Since the refrigerator-freezer includes the hermetic refrigerant compressor, which is highly efficient and has favorable reliability, the power consumption of the refrigerator-freezer can be reduced, and also, the refrigerator-freezer can be made highly reliable.

The above and other objects, features, and advantages of the present invention will more fully be apparent from the following detailed description of preferred embodiments with accompanying drawings.

### Advantageous Effects of Invention

The present invention is configured as described above, and has an advantage of being able to provide a hermetic refrigerant compressor that uses lubricating oil having a reduced viscosity and that makes it possible to achieve high efficiency and favorable reliability even in the case of reducing the sliding area of the shaft part that is pivotally supported by the bearing part.

### Brief Description of Drawings

FIG. 1 is a schematic sectional view showing one example of the configuration of a hermetic refrigerant compressor according to an embodiment of the present disclosure.
FIG. 2 is a schematic side view showing one example of the configuration of a crankshaft included in the hermetic refrigerant compressor shown in FIG. 1.
FIG. 3A is a schematic diagram showing one configuration example not covered by the claims in which a sliding surface of the crankshaft shown in FIG. 2 is a single sliding surface; and FIG. 3B and FIG. 3C are schematic diagrams each showing one configuration example in which the sliding surface of the crankshaft shown in FIG. 2 is divided into a plurality of sliding surfaces.
FIG. 4 is a schematic diagram showing one example of the configuration of a refrigerator-freezer including the hermetic refrigerant compressor shown in FIG. 1.
FIG. 5A is a graph showing one example of the molecular weight distribution of lubricating oil used in the hermetic refrigerant compressor shown in FIG. 1; FIG. 5B is a graph showing one example of the molecular weight distribution of conventional lubricating oil; and FIG. 5C is a graph showing one example of the molecular weight distribution of a high molecular weight component added to the lubricating oil according to the present disclosure.
FIG. 6 is a graph showing one example of a relationship between L / D and a frictional coefficient of the crankshaft in the hermetic refrigerant compressor shown in FIG. 1 in which the lubricating oil shown in FIG. 5A is used.
FIG. 7 is a graph showing one example of a relationship between the content of the high molecular weight component in the lubricating oil shown in FIG. 5A and the coefficient of performance of the hermetic refrigerant compressor shown in FIG. 1.

### Description of Embodiments

A hermetic refrigerant compressor according to the present disclosure includes a sealed container in which lubricating oil is stored, the sealed container accommodating an electric element and a compression element, the compression element being driven by the electric element and configured to compress a refrigerant. The lubricating oil has a kinematic viscosity in a range of 1 mm²/S to 7 mm²/S at 40°C, has a mass average molecular weight in a range of 150 to 400, and contains 0.5% by mass or more of a high molecular weight component. The high molecular weight component has a mass molecular weight of greater than or equal to 500. The compression element includes: a shaft part that is a crankshaft including a main shaft and an eccentric shaft; and a bearing part that pivotally supports the shaft part, the bearing part including a main bearing and an eccentric bearing, the main bearing pivotally supporting the main shaft, the eccentric bearing pivotally supporting the eccentric shaft. The main shaft includes a sliding surface that slides on the main bearing, the sliding surface being divided into a plurality of sliding surfaces. A length of one of the sliding surfaces in the axial direction, the one sliding surface having a least length in the axial direction among the plurality of sliding surfaces, is the single sliding length L. A ratio L / D of the single sliding length L to an external diameter D of the main shaft is less than or equal to 2.0.

According to the above configuration, the ratio L / D of the single sliding length L to the external diameter D is less than or equal to 2.0 and also, even though the lubricating oil used in the hermetic refrigerant compressor has a reduced viscosity, the average molecular weight of the lubricating oil is within a predetermined range, and the lubricating oil contains 0.5% by mass or more of the high molecular weight component whose molecular weight is relatively great. Accordingly, even though the sliding area is reduced such that the ratio L / D is less than or equal to 2.0 and an oil film is formed by the low-viscosity lubricating oil, the oil film can be favorably formed owing to the high molecular weight component. As a result, even with the use of the lubricating oil having a reduced viscosity and the use of the bearing part having a reduced sliding area, the frictional coefficient of the shaft part pivotally supported by the bearing part can be reduced. Consequently, friction at the slide part of the crankshaft can be reduced favorably, which makes it possible to achieve high efficiency and favorable reliability of the hermetic refrigerant compressor.

In the hermetic refrigerant compressor configured as above, the ratio L / D may be greater than or equal to 0.4.

According to the above configuration, the ratio L / D being greater than or equal to 0.4 makes it possible to avoid or reduce the risk of excessive reduction of the sliding area. Accordingly, even in a state where the sliding area is reduced, the frictional coefficient of the shaft part can be favorably reduced by an oil film formed by the lubricating oil, which is low-viscosity oil containing the high molecular weight component. Consequently, the friction at the slide part of the crankshaft can be reduced more favorably.

In the hermetic refrigerant compressor configured as above, the lubricating oil may contain an oily agent.

According to the above configuration, the low-viscosity lubricating oil contains the oily agent in addition to the high molecular weight component. By additionally containing the oily agent in the lubricating oil, the formation of the oil film by the lubricating oil can be further facilitated. Consequently, the friction at the slide part of the crankshaft can be reduced more favorably.

In the hermetic refrigerant compressor configured as above, the oily agent may be an ester-based compound.

According to the above configuration, since the oily agent contained in the lubricating oil is an ester-based compound, the oily agent has an ester linkage. Accordingly, owing to the polarity derived from the ester linkage, the oil film formation performance of the oily agent can be improved. Consequently, the friction at the slide part of the crankshaft can be reduced more favorably.

In the hermetic refrigerant compressor configured as above, a distillation fraction of the lubricating oil at a distillation temperature of 300°C may be 0.1% or greater, and a distillation end point may be 440°C or higher.

According to the above configuration, a component having a high distillation temperature is present in the low-viscosity lubricating oil containing the high molecular weight component. Accordingly, even though the temperature of the slide part increases due to the reduction of the sliding area, the evaporation of the lubricating oil can be avoided or suppressed effectively. As a result, the oil film can be more stably formed by the lubricating oil. Consequently, the friction at the slide part of the crankshaft can be reduced more favorably.

In the hermetic refrigerant compressor configured as above, the lubricating oil may contain a sliding modifier such that a content of the sliding modifier in the lubricating oil in terms of an atomic weight of sulfur is greater than or equal to 100 ppm.

According to the above configuration, a suitable amount of the sulfur-based sliding modifier is added to the low-viscosity lubricating oil containing the high molecular weight component. Owing to the sliding modifier, the wear resistance of the sliding surface can be improved, which makes it possible to facilitate the reduction of the friction at the slide part of the crankshaft. Accordingly, even in a state where the sliding area is reduced, the friction at the slide part can be reduced more favorably.

In the hermetic refrigerant compressor configured as above, the lubricating oil may contain a phosphorus-based extreme-pressure additive.

According to the above configuration, the phosphorus-based extreme-pressure additive is added to the low-viscosity lubricating oil containing the high molecular weight component. Owing to the extreme-pressure additive, the wear resistance of the sliding surface can be improved, which makes it possible to facilitate the reduction of the friction at the slide part of the crankshaft. Accordingly, even in a state where the sliding area is reduced, the friction at the slide part can be reduced more favorably.

In the hermetic refrigerant compressor configured as above, the lubricating oil may be at least one selected from the group consisting of mineral oil, alkyl benzene oil, and ester oil.

According to the above configuration, at least one selected from the group consisting of mineral oil, alkyl benzene oil, and ester oil is used as the lubricating oil although the lubricating oil is not particularly limited. As a result, in a case where the lubricating oil is low-viscosity oil containing the high molecular weight component, even in a state where the sliding area is reduced, the frictional coefficient of the shaft part can be readily reduced.

In the hermetic refrigerant compressor configured as above, the electric element may be inverter-driven at a plurality of operating frequencies.

According to the above configuration, in the case where the electric element is inverter-driven, regardless of whether low-speed operation is being performed or high-speed operation is being performed, a favorable oil film is formed at the slide part by the low-viscosity lubricating oil containing the high molecular weight component. Even in a state where the sliding area is reduced, the frictional coefficient of the shaft part can be reduced favorably. Consequently, the slide part of the crankshaft has a low frictional coefficient and favorable wear resistance regardless of the operating speed. This makes it possible to further improve the efficiency and reliability of the hermetic refrigerant compressor.

A refrigerator-freezer according to the present disclosure may include a refrigerant circuit including: the hermetic refrigerant compressor configured as above; a radiator; a decompressor; and a heat absorber. In the refrigerant circuit, the hermetic refrigerant compressor, the radiator, the decompressor, and the heat absorber may be connected by piping in an annular manner.

According to the above configuration, in the hermetic refrigerant compressor, the low-viscosity lubricating oil is used; the sliding area is reduced; and the shaft part has favorable reliability. Since the refrigerator-freezer includes the hermetic refrigerant compressor, which is highly efficient and has favorable reliability, the power consumption of the refrigerator-freezer can be reduced, and also, the refrigerator-freezer can be made highly reliable.

Hereinafter, representative embodiments of the present invention are described with reference to the drawings. In the drawings, the same or corresponding elements are denoted by the same reference signs, and repeating the same descriptions is avoided below.

### (Embodiment 1)

### [Configuration of Refrigerant Compressor]

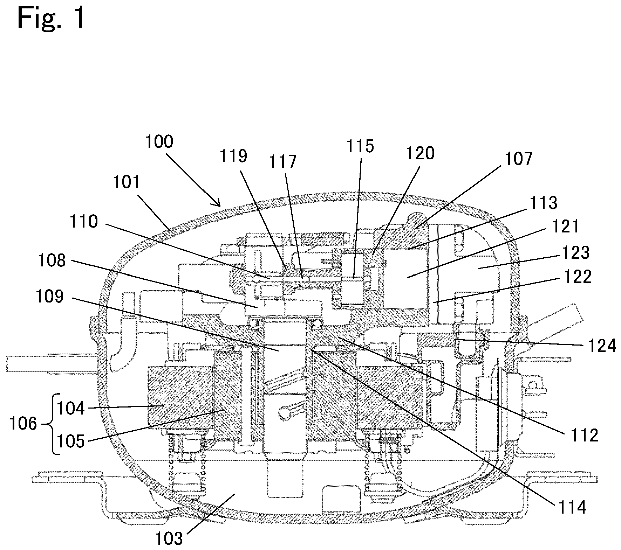

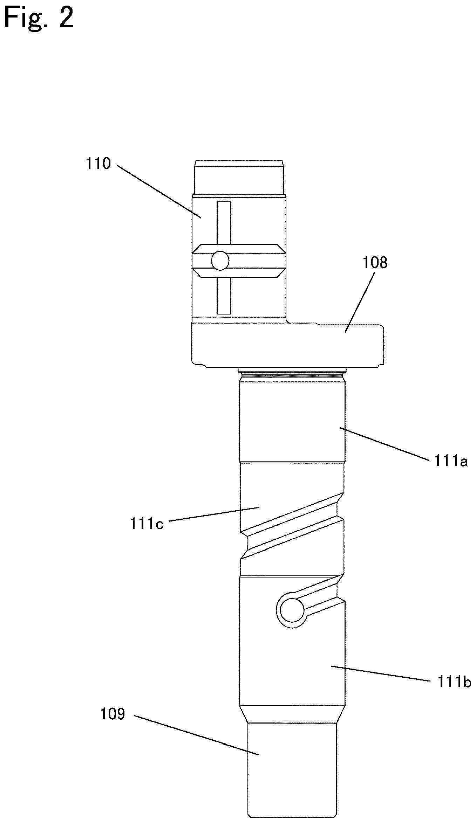

First, a representative configuration example of a hermetic refrigerant compressor according to Embodiment 1 of the present disclosure is specifically described with reference to FIG. 1 and FIG. 2. FIG. 1 is a schematic sectional view showing one example of the configuration of a hermetic refrigerant compressor 100 according to Embodiment 1 of the present disclosure (hereinafter, basically, the hermetic refrigerant compressor 100 is simply referred to as "refrigerant compressor 100"). FIG. 2 is a schematic side view showing one example of the configuration of a crankshaft 108, which is a shaft part included in the refrigerant compressor 100.

As shown in FIG. 1, the refrigerant compressor 100 includes a sealed container 101 filled with a refrigerant that is, for example, R600a. Mineral oil is stored in the bottom of the sealed container 101 as lubricating oil 103. In the present disclosure, as described below, the lubricating oil 103 has a kinematic viscosity in the range of 1 mm²/S to 7 mm²/S at 40°C, has a mass average molecular weight in the range of 150 to 400, and contains 0.5% by mass or more of a high molecular weight component. The high molecular weight component has a mass molecular weight of greater than or equal to 500. It should be noted that, in Embodiment 1, low-viscosity mineral oil is used as a specific example of the lubricating oil 103. However, the lubricating oil 103 is not limited to low-viscosity mineral oil. For example, as described below, an oil substance different from mineral oil may be used as the lubricating oil 103, or the lubricating oil 103 may contain, for example, an oily agent or an extreme-pressure additive.

The sealed container 101 also accommodates an electric element 106 and a compression element 107. The electric element 106 includes a stator 104 and a rotor 105. The compression element 107 is a reciprocating element driven by the electric element 106. The compression element 107 includes, for example, the crankshaft 108, a cylinder block 112, and a piston 120.

Also as shown in FIG. 2, the crankshaft 108 includes a main shaft 109 and an eccentric shaft 110. The rotor 105 is fixed to the main shaft 109 by press-fitting. The eccentric shaft 110 is formed such that it is eccentric with the main shaft 109. In Embodiment 1, the outer peripheral surface of the main shaft 109 of the crankshaft 108 includes a first sliding surface 111a, a second sliding surface 111b, and a non-sliding outer peripheral surface 111c. An unshown oil-feeding pump is provided at the lower end of the crankshaft 108.

In Embodiment 1, the cylinder block 112 is, for example, made of cast iron. The cylinder block 112 forms a substantially cylindrical bore 113, and includes a main bearing 114, which pivotally supports the main shaft 109 of the crankshaft 108. The inner peripheral surface of the main bearing 114 is slidably in contact with the first sliding surface 111a and the second sliding surface 111b of the outer peripheral surface of the main shaft 109, but is in contact with the non-sliding outer peripheral surface 111c.

It should be noted that, as shown in FIG. 1, the eccentric shaft 110 of the crankshaft 108 is positioned in the upper side of the refrigerant compressor 100, whereas the main shaft 109 of the crankshaft 108 is positioned in the lower side of the refrigerant compressor 100. Therefore, this upper-lower positional relationship (direction) is utilized herein when describing positions on the crankshaft 108. For example, the upper end of the eccentric shaft 110 faces the inner upper surface of the sealed container 101, and the lower end of the eccentric shaft 110 is connected to the main shaft 109. The upper end of the main shaft 109 is connected to the eccentric shaft 110, and the lower end of the main shaft 109 faces the inner lower surface of the sealed container 101. The lower end portion of the main shaft 109 is immersed in the lubricating oil 103.

In the present disclosure, the term "sliding surface" means a surface that is a portion of the outer peripheral surface of the shaft part, the portion being slidably in contact with the inner peripheral surface of a bearing part. The non-sliding outer peripheral surface 111c constitutes a portion of the outer peripheral surface of the main shaft 109. However, unlike the first sliding surface 111a and the second sliding surface 111b, the non-sliding outer peripheral surface 111c is a surface that is recessed (or receding) from the sliding surfaces (the first sliding surface 111a and the second sliding surface 111b), such that the non-sliding outer peripheral surface 111c is not in contact with the inner peripheral surface of the bearing part. In other words, the portions of the main shaft 109 serving as the sliding surfaces are greater in diameter or radius than the portion of the main shaft 109 serving as the non-sliding outer peripheral surface 111c.

The piston 120 is inserted in the bore 113 in a reciprocable manner, and thereby a compression chamber 121 is formed. A piston pin 115 having, for example, a substantially cylindrical shape is disposed parallel to the eccentric shaft 110. The piston pin 115 is locked to a piston pin hole formed in the piston 120 in a non-rotatable manner.

A coupler 117 is, for example, an aluminum casting product. The coupler 117 includes an eccentric bearing 119, which pivotally supports the eccentric shaft 110, and the coupler 117 couples the eccentric shaft 110 and the piston 120 via the piston pin 115. The coupler 117 is also referred to as a connecting rod. The end face of the bore 113 is sealed by a valve plate 122.

It should be noted that, in the present disclosure, the main shaft 109 and the eccentric shaft 110 included in the crankshaft 108 are collectively referred to as the "shaft part". Also, the main bearing 114 of the cylinder block 112, which pivotally supports the main shaft 109, and the eccentric bearing 119 of the coupler 117, which pivotally supports the eccentric shaft 110, are collectively referred to as the "bearing part".

A cylinder head 123 forms an unshown high-pressure chamber, and is fixed to the opposite side of the valve plate 122 from the bore 113. An unshown suction tube is fixed to the sealed container 101, and also connected to the low-pressure side (not shown) of a refrigeration cycle, such that the suction tube leads the refrigerant gas into the sealed container 101. A suction muffler 124 is held in a sandwiched manner between the valve plate 122 and the cylinder head 123.

The main shaft 109 of the crankshaft 108 and the main bearing 114, the piston 120 and the bore 113, the piston pin 115 and the connecting rod of the coupler 117, and the eccentric shaft 110 of the crankshaft 108 and the eccentric bearing 119 of the coupler 117, etc., form slide parts with each other.

In the refrigerant compressor 100 thus configured, first, electric power is supplied from an unshown commercial power supply to the electric element 106 to cause the rotor 105 of the electric element 106 to rotate. The rotor 105 causes the crankshaft 108 to rotate, and eccentric motion of the eccentric shaft 110 from the coupler 117 drives the piston 120 via the piston pin 115. The piston 120 makes reciprocating motion in the bore 113, sucks the refrigerant gas that has been led into the sealed container 101 through the suction tube from the suction muffler 124, and compresses the sucked refrigerant gas in the compression chamber 121.

It should be noted that a specific method adopted herein for driving the refrigerant compressor 100 is not particularly limited. For example, the refrigerant compressor 100 may be driven by simple on-off control, or may be inverter-driven at a plurality of operating frequencies. In the case where the refrigerant compressor 100 is inverter-driven, in order to optimize the operation control of the refrigerant compressor 100, low-speed operation or high-speed operation is performed. When the low-speed operation is performed, the amount of oil fed to each slide part decreases, whereas when the high-speed operation is performed, the rotation speed of the electric element 106 increases.

In the refrigerant compressor 100 according to the present disclosure, as described below, at the crankshaft 108, the sliding area of each of the shaft part and the bearing part (the pivotally supporting part) is reduced. As described below, the lubricating oil 103 is low-viscosity oil containing a high molecular weight component. This makes it possible to favorably reduce the frictional coefficient of the shaft part. Accordingly, the slide parts of the crankshaft 108 (e.g., the main shaft 109) have a low frictional coefficient and favorable wear resistance regardless of the operating speed. This makes it possible to further improve the efficiency and reliability of the hermetic refrigerant compressor.

Among the plurality of slide parts included in the refrigerant compressor 100, the main shaft 109 of the crankshaft 108 is rotatably fitted to the main bearing 114, and thereby a slide part is formed. Therefore, for the sake of convenience of the description, the slide part thus formed by the main shaft 109 and the main bearing 114 is referred to as a "main shaft slide part". Similarly, the eccentric shaft 110 of the crankshaft 108 is rotatably fitted to the eccentric bearing 119, and thereby a slide part is formed. Therefore, for the sake of convenience of the description, the slide part thus formed by the eccentric shaft 110 and the eccentric bearing 119 is referred to as an "eccentric shaft slide part". Also, the "main shaft slide part" and the "eccentric shaft slide part" are collectively referred to as a "shaft slide part".

In accordance with the rotation of the crankshaft 108, the oil-feeding pump feeds the lubricating oil 103 to each slide part, and thereby each slide part is lubricated. It should be noted that the lubricating oil 103 also serves to seal between the piston 120 and the bore 113. In the present disclosure, as described below, the lubricating oil 103 is low-viscosity oil containing a high molecular weight component. Such lubricating oil 103 can favorably lubricate each slide part, and also favorably seal between the piston 120 and the bore 113.

### [Configuration of Shaft Slide Part]

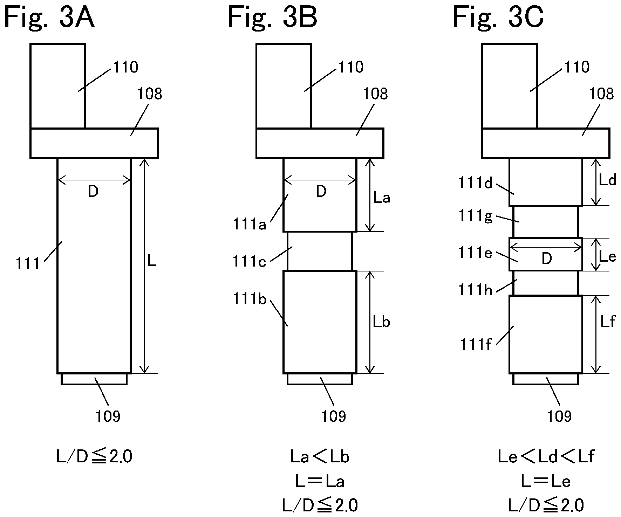

Next, one example of a specific configuration of the shaft slide part according to the present disclosure is specifically described with reference to FIG. 3A to FIG. 3C. FIG. 3A is a schematic diagram showing one configuration example not covered by the claims in which the sliding surface of the crankshaft 108 shown in FIG. 2 is a single sliding surface. FIG. 3B and FIG. 3C are schematic diagrams each showing one configuration example in which the sliding surface of the crankshaft 108 shown in FIG. 2 is divided into a plurality of sliding surfaces.

In the example shown in FIG. 2, the main shaft 109 of the crankshaft 108, which is the shaft part, is configured to include the first sliding surface 111a and the second sliding surface 111b. In other words, the sliding surface of the main shaft 109 is divided into a plurality of sliding surfaces. The configuration of the main shaft 109 shown in FIG. 2, i.e., the configuration in which the sliding surface is divided into two sliding surfaces, corresponds to the schematic diagram shown in FIG. 3B.

A specific manner of dividing the sliding surface into a plurality of sliding surfaces is not particularly limited. Typically, between a plurality of sliding surfaces, a recess that is recessed (or receding) from the sliding surfaces toward the center axis may be formed. The recess serves as the non-sliding outer peripheral surface 111c as shown in FIG. 2 and FIG. 3B. A specific shape of the recess is not particularly limited. For example, the depth of the recess may be set to any depth, so long as the set depth will not affect, for example, the stiffness and strength of the main shaft 109. Similarly, the width of the recess (i.e., the distance between the plurality of sliding surfaces) is not particularly limited. The width of the recess can be suitably set in accordance with how much the sliding surface is to be narrowed down (i.e., in accordance with an intended reduction or decrease in the sliding area).

In the case of dividing the sliding surface into a plurality of sliding surfaces, the plurality of sliding surfaces are not particularly limited to a specific number of surfaces. As shown in FIG. 2 and FIG. 3B, the sliding surface may be divided into the first sliding surface 111a and the second sliding surface 111b, i.e., a total of two sliding surfaces. Alternatively, as shown in FIG. 3C, the sliding surface may be divided into a first sliding surface 111d, a second sliding surface 111e, and a third sliding surface 111f, i.e., a total of three sliding surfaces, or may be divided into four or more sliding surfaces. In the configuration shown in FIG. 3C, a first non-sliding outer peripheral surface 111g, which is the same recess as the non-sliding outer peripheral surface 111c, is positioned between the first sliding surface 111d and the second sliding surface 111e, and a second non-sliding outer peripheral surface 111h, which is a similarly formed recess, is positioned between the second sliding surface 111e and the third sliding surface 111f.

In the present disclosure, the ratio of the length of the sliding surface of the shaft part in the axial direction to the external diameter (the diameter) of a portion of the shaft part, the portion serving as the sliding surface, is set to less than or equal to a predetermined value, and thereby the sliding area can be reduced without substantially affecting the wear resistance. Specifically, in a case where the sliding surface is a single sliding surface (e.g., see FIG. 3A), the length of the single sliding surface in the axial direction is a single sliding length L, whereas in a case where the sliding surface is divided into a plurality of sliding surfaces (e.g., FIG. 3B or FIG. 3C), the length of one of the sliding surfaces in the axial direction, the one sliding surface having the least length in the axial direction among the plurality of sliding surfaces, is the single sliding length L. Then, in a case where the external diameter (the diameter) of a portion of the shaft part, the portion serving as the sliding surface, is an external diameter D, the shaft part is designed such that the ratio L / D of the single sliding length L to the external diameter D of the shaft part is less than or equal to 2.0.

For the sake of convenience of the description of the external diameter D and the single sliding length L, FIG. 3A is illustrated such that the length L of the single sliding surface 111 (i.e., the single sliding length L) is greater than the external diameter D. If the length L of the single sliding surface 111 relative to the external diameter D is exactly as illustrated in FIG. 3A, the ratio L / D is greater than 2.0. However, in reality, for example, by forming a recess (a non-sliding outer peripheral surface) on the upper portion (the eccentric shaft 110 side) or the lower portion (the lubricating oil 103 side) of the main shaft 109 as seen from the single sliding surface 111, the ratio L / D can be set to less than or equal to 2.0 (L / D ≤ 2.0).

In FIG. 3B, the sliding surface is divided into the first sliding surface 111a and the second sliding surface 111b. In the example shown in FIG. 3B, the length La of the upper first sliding surface 11 1a in the axial direction is less than the length Lb of the lower second sliding surface 11 1b in the axial direction (La < Lb). In this case, the first sliding surface 11 1a is the "sliding surface having the least length". Accordingly, the length La of the first sliding surface 111a is the single sliding length L (L = La). In this example, on the first sliding surface 111a, La / D may be less than or equal to 2.0 (La / D ≤ 2.0).

It should be noted that, similar to FIG. 3A, FIG. 3B is illustrated such that the length La of the first sliding surface 111a is greater than the external diameter D for the sake of convenience of the description of the external diameter D and the length La. Also in this case, the ratio L / D can be set to less than or equal to 2.0, for example, by increasing the length of the non-sliding outer peripheral surface 111c in the axial direction or by forming an unshown non-sliding outer peripheral surface (a recess) on the upper side of the first sliding surface 111a.

In FIG. 3C, the sliding surface is divided into the first sliding surface 111d, the second sliding surface 111e, and the third sliding surface 111f In the example shown in FIG. 3C, the length Le of the middle second sliding surface 111e in the axial direction is less than the length Ld of the upper first sliding surface 111d in the axial direction, and the length Ld is less than the length Lf of the lower third sliding surface 111f in the axial direction (Le < Ld < Lf). In this case, the second sliding surface 111e is the "sliding surface having the least length". Accordingly, the length Le of the second sliding surface 111e is the single sliding length L (L = Le). In this example, on the second sliding surface 11 1e, Le / D may be less than or equal to 2.0 (Le / D ≤ 2.0).

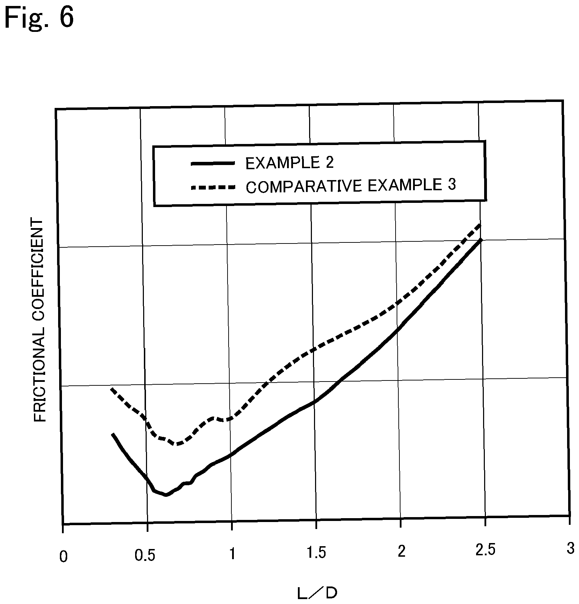

In the present disclosure, the lower limit value of the ratio L / D is not particularly limited. One preferable example of the lower limit value is greater than or equal to 0.4 as indicated in below-described Examples (see Example 2, Comparative Example 3, and FIG. 6). Accordingly, a preferable range of the ratio L / D in the present disclosure is 0.4 to 2.0.

In a case where the ratio L / D is greater than 2.0, basically, the sliding area is too large. Consequently, in this case, even if the below-described low-viscosity oil that contains a high molecular weight component is used as the lubricating oil 103, sufficiently high efficiency of the refrigerant compressor 100 cannot be achieved. On the other hand, in a case where the ratio L / D is less than 0.4, although depending on various conditions of the shaft part, there is a risk of the sliding area becoming too small. Consequently, in this case, it is possible that the frictional coefficient reduction effect by the lubricating oil 103 cannot be obtained sufficiently.

For instance, in the Examples described below, the frictional coefficient is minimal when the ratio L / D is in the range of 0.5 to 0.7. Even in a case where the ratio L / D is less than 0.4, the frictional coefficient is similar to that in a case where the ratio L / D is in the range of about 1.0 to 1.2 (see FIG. 6). In other words, in a case where the sliding area is reduced such that the ratio L / D is less than 0.4, an increase in the frictional coefficient is similar to that in a case where the ratio L / D is in the range of about 1.0 to 1.2. Considering the minimal value of the frictional coefficient, the ratio L / D being greater than or equal to 0.4 can be set as a "threshold" for favorably achieving both the sliding area reduction effect and the frictional coefficient reduction effect.

It should be noted that, as previously mentioned, depending on various conditions of the shaft part (e.g., a specific shape or material of the crankshaft 108, a specific configuration of the compression element 107 including the crankshaft 108, etc.), it is possible that in the relationship between the ratio L / D and the frictional coefficient, the range of the ratio L / D in which the frictional coefficient becomes minimal is shifted from the range of 0.5 to 0.7. In this case, the lower limit value of the ratio L / D can be set to less than 0.4.

On the other hand, in the present disclosure, the upper limit value of the ratio L / D is set to less than or equal to 2.0 regardless of various conditions of the shaft part. According to Patent Literature 2, both the vibration reduction effect and the bearing loss suppression effect can be achieved by setting the ratio L / D in the range of 2.0 to 2.5. However, in the Examples described below, there is a tendency for the rate of increase in the frictional coefficient to become higher from a point at which the ratio L / D exceeds 2.0 (see FIG. 6). From this tendency, it can be considered that if the sliding area becomes too large, the frictional coefficient reduction effect by the lubricating oil 103 (low-viscosity oil containing a high molecular weight component) in the present disclosure cannot be exerted sufficiently (in other words, the frictional coefficient reduction effect by the lubricating oil 103 can be exerted sufficiently when the sliding area is smaller than that in the conventional art).

As described above, in the present disclosure, in a case where the lubricating oil 103, which is low-viscosity oil containing a high molecular weight component, is used, the upper limit of the ratio L / D of the crankshaft 108 may be less than or equal to 2.0. Although the lower limit value of the ratio L / D is not particularly limited, one preferable example of the lower limit value is greater than or equal to 0.4. Although depending on various conditions, the ratio L / D being greater than or equal to 0.4 makes it possible to avoid or reduce the risk of excessive reduction of the sliding area.

Accordingly, even in a state where the sliding area is reduced, rapid increase in the frictional coefficient of the shaft part can be favorably suppressed by an oil film formed by the lubricating oil 103, which is low-viscosity oil containing a high molecular weight component. Consequently, the friction at the slide part of the crankshaft 108 can be reduced more favorably, which makes it possible to favorably achieve high efficiency and wear resistance of the refrigerant compressor 100.

It should be noted that, in the examples shown in FIG. 3A to FIG. 3C, the main shaft 109 of the crankshaft 108 is referred to as the shaft part, and the ratio L / D is described about the main shaft 109. However, the present disclosure is not thus limited. The same is true of the eccentric shaft 110. Specifically, in a case where a sliding surface of the eccentric shaft 110, the sliding surface being configured to slide on the eccentric bearing 119, is a single sliding surface, the length of the single sliding surface in the axial direction is the single sliding length L, whereas in a case where the sliding surface of the eccentric shaft 110 is divided into a plurality of sliding surfaces, the length of one of the sliding surfaces in the axial direction, the one sliding surface having the least length in the axial direction among the plurality of sliding surfaces, is the single sliding length L. In these cases, the ratio L / D of the single sliding length L to the external diameter D of the eccentric shaft 110 may be less than or equal to 2.0.

Therefore, in the refrigerant compressor 100 according to the present disclosure, at least one of the main and eccentric shafts 109 and 110 forming the shaft part may have a ratio L / D of less than or equal to 2.0. It will suffice if at least one of the main and eccentric shafts 109 and 110 has a ratio L / D of less than or equal to 2.0.

### [Configuration of Lubricating Oil]

Next, a more specific configuration of the lubricating oil 103 stored in the sealed container 101 is specifically described.

The lubricating oil 103 used in the refrigerant compressor 100 according to the present disclosure is low-viscosity oil that has a kinematic viscosity in the range of 1 mm²/S to 7 mm²/S at 40°C, has a mass average molecular weight in the range of 150 to 400, and contains 0.5% by mass or more of a high molecular weight component. The high molecular weight component has a relatively high molecular weight, i.e., has a mass molecular weight of greater than or equal to 500. A specific material of the lubricating oil 103 is not particularly limited. Typically, for example, at least one oil substance selected from the group consisting of mineral oil, alkyl benzene oil, and polyalkylene glycol oil can be suitably used as the lubricating oil 103.

The lubricating oil 103 used in the present disclosure may originally contain the high molecular weight component. Alternatively, an oil substance serving as the high molecular weight component may be added to the lubricating oil 103, such that the lubricating oil 103 contains 0.5% by mass or more of the high molecular weight component. In the former case, for example, mineral oil may be used as the lubricating oil 103. Unrefined or roughly refined raw material mineral oil may be refined to prepare (produce) the lubricating oil 103. At the time, refining conditions or refining technique for refining the raw material oil may be adjusted such that 0.5% by mass or more of the high molecular weight component remains after the refining. In the latter case, for example, mineral oil, alkyl benzene oil, or polyalkylene glycol oil may be contained in the lubricating oil 103 as its "principal component" and an oil substance serving as the high molecular weight component may be added as an "additive component" to the principal component.

As previously mentioned, the mass average molecular weight of the lubricating oil 103 used in the present disclosure may be in the range of 150 to 400. In a case where the mass average molecular weight of the lubricating oil 103 is within this range, the aforementioned kinematic viscosity range at 40°C is achieved favorably, and also in this case, by containing 0.5% by mass or more of the high molecular weight component in the lubricating oil 103, a favorable oil film can be formed even when the sliding area is reduced such that the ratio L / D is less than or equal to 2.0. The mass average molecular weight of the lubricating oil 103 may be in the range of 200 to 300. If the mass average molecular weight of the lubricating oil 103 is within this range, although depending on various conditions, a favorable oil film can be formed more easily when the sliding area is reduced such that the ratio L / D is less than or equal to 2.0.

In a case where the lubricating oil 103 is prepared by adding the high molecular weight component to the principal component, a specific material or specific kind of the high molecular weight component is not particularly limited. The high molecular weight component may be an oil substance whose mass molecular weight is greater than or equal to 500. For example, in a case where the principal component is mineral oil, the high molecular weight component may also be mineral oil, or the high molecular weight component may be alkyl benzene oil, polyalkylene glycol oil, or a different oil substance.

A method of measuring the mass average molecular weight of the lubricating oil and the mass molecular weight of the high molecular weight component is not particularly limited. In the present disclosure, these weights can be measured and expressed in terms of standard polystyrene by GPC (Gel Permeation Chromatography) technique that is used in the below-described Examples. That is, the mass average molecular weight (weight average molecular weight) of the lubricating oil may be measured by GPC technique as a weight (mass) average molecular weight in terms of polystyrene. To determine whether or not the mass molecular weight of the high molecular weight component is greater than or equal to 500, a molecular weight distribution graph indicating a relationship between differential molar mass distribution and mass molecular weight may be measured by GPC technique. By using the molecular weight distribution graph, whether or not the mass molecular weight of the high molecular weight component is greater than or equal to 500 may be determined based on whether or not the mass molecular weight has a peak greater than or equal to 500.

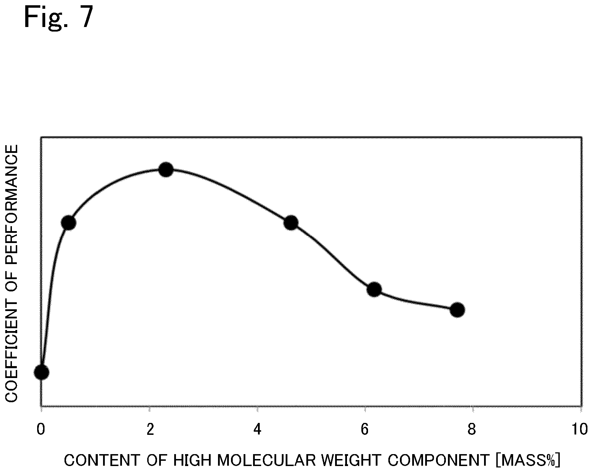

In the lubricating oil 103 used in the present disclosure, the lower limit content of the high molecular weight component may be 0.5% by mass, and the upper limit content of the high molecular weight component is not particularly limited, so long as the upper limit content does not affect, at least, the functions of the lubricating oil 103 or the functional advantages provided by the lubricating oil 103. According to the Examples described below (see Example 3 and FIG. 7), in a case where the lubricating oil 103 contains at least 0.5% by mass of the high molecular weight component, the coefficient of performance (COP) of the refrigerant compressor 100 is improved as compared to a case where the lubricating oil 103 does not contain the high molecular weight component (0% by mass).

Further, according to the Examples described below (see Example 3 and FIG. 7), one preferable example of the upper limit content of the high molecular weight component in the lubricating oil 103 is less than or equal to 7.0% by mass. The upper limit content of the high molecular weight component is more preferably less than or equal to 6.0% by mass, and yet more preferably 5.0% by mass. As compared to a case where the lubricating oil 103 does not contain the high molecular weight component (0% by mass), the coefficient of performance is improved even in a case where the content of the high molecular weight component in the lubricating oil 103 is greater than 7.0% by mass. However, if the content of the high molecular weight component in the lubricating oil 103 is greater than 7.0% by mass, it is possible that the coefficient of performance improving effect obtained in this case is unfavorably disproportionate to the content of the high molecular weight component. In light of this, in the present disclosure, the upper limit content of the high molecular weight component may be set to less than or equal to 7.0% by mass.

Still further, according to the Examples described below, the coefficient of performance in a case where the content of the high molecular weight component is less than or equal to 6.0% by mass is better than the coefficient of performance in a case where the content of the high molecular weight component is greater than 6.0% by mass. In light of this, in the present disclosure, a preferable upper limit content of the high molecular weight component is less than or equal to 6.0% by mass. Still further, according to the Examples described below, the coefficient of performance exhibits its maximal value in a case where the content of the high molecular weight component is about 2.0 to 2.5% by mass. Even in a case where the lubricating oil 103 contains about 5.0% by mass of the high molecular weight component, the coefficient of performance is similar to that in a case where the lubricating oil 103 contains 0.5% by mass of the high molecular weight component, which is the lower limit content of the high molecular weight component. In light of this, in the present disclosure, a more preferable upper limit content of the high molecular weight component is less than or equal to 5.0% by mass.

Accordingly, in the present disclosure, the content of the high molecular weight component in the lubricating oil 103 is preferably in the range of 0.5% by mass to 7.0% by mass, more preferably in the range of 0.5% by mass to 6.0% by mass, and yet more preferably in the range of 0.5% by mass to 5.0% by mass. It should be noted that, depending on various conditions of the refrigerant compressor 100 or various conditions of the shaft part to be lubricated, it is possible that the maximal value of the coefficient of performance is shifted to the high molecular weight component content decreasing side or to the high molecular weight component content increasing side. In such a case, the upper limit content of the high molecular weight component may be set to a value greater than 7.0% by mass, or to a value less than 0.5% by mass.

It should be noted that if the content of the high molecular weight component in the lubricating oil 103 is within any of the aforementioned preferable ranges, it is basically determined that the mass average molecular weight of the lubricating oil 103 is in the range of 150 to 400. Specifically, if the ratio of the high molecular weight component to the lubricating oil 103 is within any of the aforementioned preferable ranges, it can be assumed that, when looking at the lubricating oil 103 as a whole, the high molecular weight component barely affects increase in the mass average molecular weight (i.e., the mass average molecular weight of the lubricating oil 103 does not exceed 400). Thus, the upper limit content of the high molecular weight component in the lubricating oil 103 can be set within such a range as not to affect the functions of the lubricating oil 103 and not to cause excessive increase in the mass average molecular weight.

In the present disclosure, the reason why the coefficient of performance of the refrigerant compressor 100 is improved by containing the high molecular weight component in the lubricating oil 103 is, as the results in the below-described Examples indicate, that even though the lubricating oil 103 has a low viscosity (the kinematic viscosity at 40°C is in the range of 1 mm²/S to 7 mm²/S), the lubricating oil 103 contributes to the formation of a favorable oil film at the slide part owing to the high molecular weight component. Specifically, while the crankshaft 108 is sliding, the high molecular weight component can be present on the outer peripheral surface (sliding surface) of the main shaft 109 and the inner peripheral surface (sliding surface) of the main bearing 114, the outer and inner peripheral surfaces forming the slide part, regardless of the entire flow of the lubricating oil 103 at the slide part, and thereby the oil film is favorably formed by the lubricating oil 103.

In the present disclosure, only one oil substance may be used as the lubricating oil 103, or a suitable combination of two or more oil substances may be used as the lubricating oil 103. The definition of a combination of two or more oil substances herein includes not only a combination of, for example, two or more different oil substances, each of which is mineral oil, but also a combination of, for example, at least one oil substance that is a mineral oil and at least one oil substance that is alkyl benzene oil (or at least one oil substance that is polyalkylene glycol oil).

In a case where the lubricating oil 103 is prepared by adding the high molecular weight component as an additive component to the principal component, for example, one oil substance may be used as the principal component, and another oil substance different from the principal component may be used as the high molecular weight component. Alternatively, two or more oil substances may be used as the principal component, and one oil substance may be used as the high molecular weight component. Further alternatively, one oil substance may be used as the principal component, and two or more oil substances may be used as the high molecular weight component. Still further alternatively, two or more different oil substance mixtures, in each of which the high molecular weight component is added to the principal component, may be mixed together to prepare the lubricating oil 103.

The oil substances used in the present disclosure are not particularly limited. At least one oil substance from among mineral oil, alkyl benzene oil, and ester oil may be used as the principal component and/or the high molecular weight component. The lubricating oil 103 thus prepared makes it possible to favorably achieve, even in a state where the sliding area is reduced, the effect of reducing the frictional coefficient of the shaft part.

The physical properties of the lubricating oil 103 (oil substance or lubricating oil composition) used in the present disclosure are not particularly limited except the aforementioned kinematic viscosity at 40°C. Preferable physical properties of the lubricating oil 103 are, for example, such distillation properties that the distillation fraction of the lubricating oil 103 at a distillation temperature of 300°C is 0.1% or greater and the distillation end point is 440°C or higher. A method of measuring the distillation properties is not particularly limited. In the present disclosure, a measurement method in compliance with JIS K2254: 1998 "Petroleum products-Determination of distillation characteristics" or in compliance with JIS K2601: 1998 "Testing methods for crude petroleum" is used.

At the slide part formed by the shaft part and the bearing part, heat is generated due to friction between sliding surfaces upon sliding motion, and it is known that at an early stage of the friction, an instantaneous temperature rise called "flash temperature" occurs. The outer peripheral surface of the shaft part and the inner peripheral surface of the bearing part are configured as smooth sliding surfaces so as to achieve favorable slidability. However, even though the sliding surfaces are macroscopically smooth surfaces, there are microscopically fine protrusions on the sliding surfaces. During sliding motion, the fine protrusions of one sliding surface repeatedly adhere to and break away from the other sliding surface. When the fine protrusions of the one sliding surface break away from the other sliding surface, thermal energy is released, and when the released thermal energy concentrates, an instantaneous temperature rise occurs. A high temperature resulting from the instantaneous temperature rise is hereinafter called "flash temperature".

For example, Reference Literature 1: Japanese Laid-Open Patent Application Publication No. 2006-097096 discloses a carburized or carbonitrided bearing steel component. According to Reference Literature 1, generally speaking, seizing occurs when the flash temperature exceeds about 140°C. It is also known that the flash temperature at the slide part reaches several hundred degrees Celsius. In the present disclosure, in the case of using the lubricating oil 103, which is low-viscosity oil containing the high molecular weight component, a condition that the flash temperature at the slide part is 300°C or higher is important.

Therefore, preferably, the distillation properties of the lubricating oil 103 (oil substance or lubricating oil composition) used in the present disclosure are such that the distillation fraction (volume fraction) of the lubricating oil 103 at a distillation temperature of 300°C is 0.1% or greater and the distillation end point is 440°C or higher. In a case where the lubricating oil 103 has these preferable distillation properties, even when the flash temperature of 300°C or higher occurs at the slide part, problems such as the evaporation of the oil film formed by the lubricating oil 103 can be suppressed or prevented effectively. Consequently, even though the lubricating oil 103 is low-viscosity oil containing the high molecular weight component and the temperature of the slide part increases due to the reduction of the sliding area, the oil film can be more stably formed by the lubricating oil 103.

The lubricating oil 103 used in the present disclosure may be a low-viscosity oil substance containing the high molecular weight component. Various additives may be added to the oil substance. In other words, the lubricating oil 103 used in the present disclosure may be a lubricating oil composition that contains not only the oil substance but also another component. As previously described, only one oil substance may be used as the lubricating oil 103, or a combination of two or more oil substances may be used as the lubricating oil 103. Also in the case of using a combination of two or more oil substances as the lubricating oil 103, the lubricating oil 103 may be defined as a "lubricating oil composition". Alternatively, in the case of using a combination of two or more oil substances as the lubricating oil 103, the lubricating oil 103 may be defined as "mixed oil", whereas in the case of containing not only the oil substance but also another component in the lubricating oil 103, the lubricating oil 103 may be defined as a "lubricating oil composition".

In a case where the lubricating oil 103 used in the present disclosure is a lubricating oil composition that contains not only the oil substance but also another component, this other component is not particularly limited to a specific component. A typical example of the other component is an additive known in the field of the lubricating oil 103. In particular, in the present disclosure, the lubricating oil 103 preferably contains an oily agent. By adding the oily agent to the lubricating oil 103, the formation of the oil film on the sliding surfaces of the slide part by the lubricating oil 103 is facilitated. Consequently, the friction at the slide part can be reduced more favorably.

The oily agent is not particularly limited to a specific kind of oily agent. Typical examples of the oily agent include higher fatty acids, higher alcohols, esters (ester-based compounds), ethers, amines, amides, and metal soaps. Only one of these oily agents may be used, or two or more of these oily agents may be suitably used in combination. The addition amount(s) of the oily agent(s) is/are not particularly limited, and the oily agent(s) may be added in the range of, for example, 0.01 to 1% by weight.

In the present disclosure, a more preferable example of the oily agent is an ester-based compound. The ester-based compound may be a compound having an ester structure in which an alcohol and a carboxylic acid are reacted with each other. The alcohol may be a monohydric alcohol, or may be a polyhydric alcohol, which is at least bivalent. Similarly, the carboxylic acid may be a monocarboxylic acid, a dicarboxylic acid, or a tricarboxylic acid (or may be a carboxylic acid containing four or more carboxyl groups). Generally speaking, a commercially available ester-based oily agent can be suitably used.

As previously described, the lubricating oil 103 used in the present disclosure is low-viscosity oil containing the high molecular weight component. In a case where the lubricating oil 103 is a lubricating oil composition containing the oily agent, the oil film formation performance can be further improved. As previously described, since the lubricating oil 103 used in the present disclosure contains the high molecular weight component, the high molecular weight component is present on the sliding surfaces of the main shaft 109 and the main bearing 114, the sliding surfaces forming a slide part, and consequently, the oil film can be favorably formed by the lubricating oil 103. Further, by containing the oily agent in the lubricating oil 103, the oily agent adheres to the sliding surfaces of the main shaft 109 and the main bearing 114, and thereby the formation of the oil film by the lubricating oil 103 (lubricating oil composition) is further facilitated.

In particular, in a case where the oily agent is an ester-based compound, the oily agent has an ester linkage. Accordingly, owing to the polarity derived from the ester linkage, the adhesion of the oil film formed by the lubricating oil 103 (lubricating oil composition) to the slide part can be further facilitated (i.e., the adhesiveness of the oil film can be further improved), which makes it possible to further improve the oil film formation performance of the lubricating oil 103. Therefore, the frictional coefficient can be further reduced, and the friction at the slide part can be reduced more favorably.

The lubricating oil 103 used in the present disclosure may contain, as additives, not only the above-described oily agent but also a sulfur-based sliding modifier. The sulfur-based sliding modifier may be a sulfur-based sliding modifier that allows the material of the shaft part (shaft part material) and sulfur to react with each other. Accordingly, the sliding modifier may be sulfur, or may be a sulfur compound that contains sulfur and that is reactive with the shaft part material.

In the present disclosure, since the material of the shaft part is a ferrous material, examples of sulfur compounds usable as the sliding modifier include sulfurized olefins, sulfide-based compounds (e.g., dibenzyl disulfide (DBDS)), xanthates, thiadiazoles, thiocarbonates, sulfurized oil or fat, sulfurized esters, dithiocarbamates, and sulfurized terpenes.

The content of the sulfur-based sliding modifier in the lubricating oil 103 is not particularly limited. Preferably, the sliding modifier may be added to the lubricating oil 103, such that the content of the sliding modifier in the lubricating oil 103 in terms of the atomic weight of sulfur is greater than or equal to 100 ppm. It should be noted that the upper limit addition amount of the sliding modifier is not particularly limited, so long as the upper limit addition amount is such an amount (e.g., 1000 ppm or less) as not to affect the physical properties of the lubricating oil 103 (lubricating oil composition).

As previously described, the lubricating oil 103 used in the present disclosure is low-viscosity oil containing the high molecular weight component. In a case where the lubricating oil 103 is a lubricating oil composition containing the sliding modifier in addition to the oily agent, the wear resistance of the sliding surfaces can be improved by the sliding modifier. Accordingly, even in a state where the sliding area is reduced, the friction at the slide part can be reduced more favorably.

The lubricating oil 103 used in the present disclosure may contain, as additives, not only the above-described oily agent and sliding modifier but also a known extreme-pressure additive. A specific extreme-pressure additive to be added to the lubricating oil 103 is not particularly limited, and a known extreme-pressure additive can be suitably used. Examples of known extreme-pressure additives that can be suitably used include phosphorus-based compounds, such as phosphate esters, and halogenated compounds, such as chlorine-based hydrocarbons or fluorine-based hydrocarbons. Only one of these extreme-pressure additives may be added to the lubricating oil composition (lubricating oil 103), or a suitable combination of two or more of these extreme-pressure additives may be added to the lubricating oil composition (lubricating oil 103).

Among these extreme-pressure additives, a phosphorus-based compound can be used preferably. Typical examples of the phosphorus-based compound include tricresyl phosphate (TCP), tributyl phosphate (TBP), and triphenyl phosphate (TPP). Among these, TCP is particularly preferable. In addition to the sulfur-based sliding modifier, a phosphorus-based extreme-pressure additive may be added to the lubricating oil 103, and thereby, for example, wear of the shaft slide part can be reduced favorably.

The amount of the extreme-pressure additive to be added to the lubricating oil composition is not particularly limited. For example, in a case where the principal component of the lubricating oil 103 is a low-polarity substance such as mineral oil or alkyl benzene oil, a suitable addition amount of the extreme-pressure additive is in the range of 0.5 to 8.0% by weight, and more preferably in the range of 1 to 3% by weight.

As previously described, the lubricating oil 103 used in the present disclosure is low-viscosity oil containing the high molecular weight component. In a case where the lubricating oil 103 is a lubricating oil composition containing the extreme-pressure additive in addition to the oily agent, the wear resistance of the sliding surfaces can be improved by the extreme-pressure additive. In particular, by containing both the sliding modifier and the extreme-pressure additive in the lubricating oil 103, wear of the sliding surfaces can be reduced more favorably by their synergistic effect. Accordingly, even in a state where the sliding area is reduced, the friction at the slide part can be reduced more favorably.

Further, in the refrigerant compressor 100 according to the present disclosure, known various additives may be added to the lubricating oil 103 in addition to the oily agent, the sliding modifier, and the extreme-pressure additive. Those known in the field of the lubricating oil 103 can be suitably used as the various additives to be added to the lubricating oil 103. Typical examples of such additives include antioxidants, acid-acceptors, metal deactivators, defoaming agents, anti-corrosive agents, and dispersants.

In other words, the lubricating oil 103 used in the refrigerant compressor 100 according to the present disclosure may be a low-viscosity oil substance containing a high molecular weight component (the low-viscosity oil substance may be formed by only one oil substance, or may be mixed oil containing two or more oil substances). Preferably, the lubricating oil 103 may be a lubricating oil composition (formed by an oil substance and an oily agent) that is prepared by adding the oily agent to the oil substance. As another preferable example, the lubricating oil composition may contain, as the additive(s), a sliding modifier and/or an extreme-pressure additive.

As described above, the refrigerant compressor 100 according to the present disclosure satisfies the following conditions (1) and (2). The condition (1) is that the lubricating oil 103 used in the refrigerant compressor 100 has a kinematic viscosity in the range of 1 mm²/S to 7 mm²/S at 40°C, has a mass average molecular weight in the range of 150 to 400, and contains 0.5% by mass or more of a high molecular weight component whose mass molecular weight is greater than or equal to 500. The condition (2) is that the ratio L / D of the single sliding length L to the external diameter D of the shaft part is less than or equal to 2.0. The condition (2) can be satisfied regardless of whether the sliding surface of the shaft part is a single sliding surface or divided into a plurality of sliding surfaces, so long as the ratio L / D is less than or equal to 2.0. As one preferable example, the refrigerant compressor 100 may satisfy, in addition to the conditions (1) and (2), a condition (3) that the lubricating oil 103 contains an oily agent (in particular, an ester-based oily agent).

Accordingly, even though the lubricating oil 103 is low-viscosity oil and the sliding area is reduced such that the ratio L / D is less than or equal to 2.0, the oil film can be favorably formed by the lubricating oil 103 at the slide part formed by the shaft part and the bearing part owing to the high molecular weight component whose mass molecular weight is greater than or equal to 500. This makes it possible to reduce the frictional coefficient of the slide part and also to favorably suppress the wear of the slide part. Therefore, the reliability of the shaft part pivotally supported by the bearing part can be improved. Consequently, the efficiency and reliability of the refrigerant compressor 100 can be further improved.

It should be noted that the refrigerant compressor 100 according to the present disclosure may be inverter-driven at a plurality of operating frequencies as previously mentioned. In a case where the refrigerant compressor 100 is inverter-driven, there are two operation modes of the electric element 106, in one of which the electric element 106 is operated at a low rotation speed (low-speed operation), and in the other of which the electric element 106 is operated at a high rotation speed (high-speed operation). When the electric element 106 is operated at a low rotation speed, the amount of lubricating oil 103 fed to the shaft slide part decreases. In the present disclosure, although the sliding area of the shaft slide part is reduced, even when the amount of lubricating oil 103 fed to the shaft slide part decreases, high efficiency and favorable wear resistance can be achieved.

Also, even when the rotation speed of the electric element 106 shifts from a low rotation speed to a high rotation speed (i.e., even when the rotation speed of the electric element 106 increases), favorable wear resistance can be achieved. Therefore, in a case where the refrigerant compressor 100 is inverter-driven, regardless of whether the low-speed operation is being performed or the high-speed operation is being performed, the oil film that is derived from the ester-based oily agent and the component whose mass molecular weight is greater than or equal to 500 can be formed on the shaft slide part. Consequently, the reliability of the refrigerant compressor 100 can be improved, and also, the operating efficiency can be improved.

### (Embodiment 2)

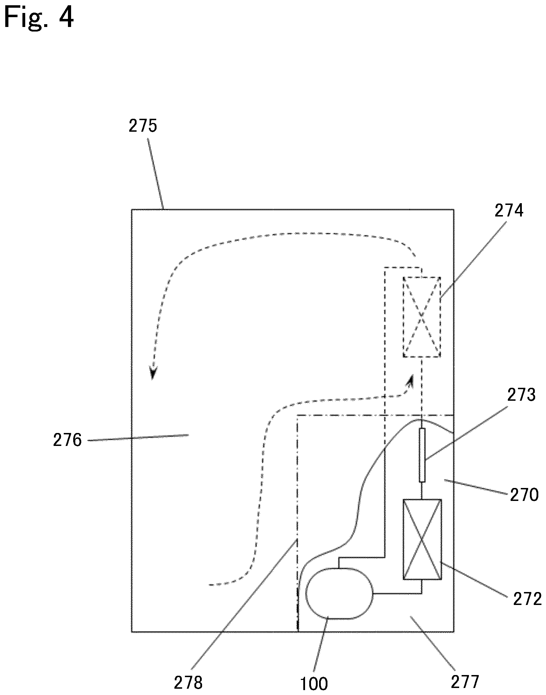

In Embodiment 2, one example of a refrigerator-freezer that includes the refrigerant compressor 100 described above in Embodiment 1 is specifically described with reference to FIG. 4. FIG. 4 is a schematic diagram showing a schematic configuration of the refrigerator-freezer including the refrigerant compressor 100 according to Embodiment 1. Therefore, in Embodiment 2, only a fundamental configuration of the refrigerator-freezer is described briefly.

As shown in FIG. 4, the refrigerator-freezer according to Embodiment 2 includes, for example, a body 275, a dividing wall 278, and a refrigerant circuit 270. The body 275 is constituted by a thermally-insulated box, a door, and so forth. The box is configured to have one opening face, and the door is configured to open/close the opening of the box. The interior of the body 275 is divided by the dividing wall 278 into a product storage space 276 and a machinery room 277. An unshown air feeder is provided in the storage space 276. It should be noted that the interior of the body 275 may be divided into, for example, spaces that are different from the storage space 276 and the machinery room 277.

The refrigerant circuit 270 is configured to cool the inside of the storage space 276. For example, the refrigerant circuit 270 includes the refrigerant compressor 100 described above in Embodiment 1, a radiator 272, a decompressor 273, and a heat absorber 274, which are connected by piping in an annular manner. The heat absorber 274 is disposed in the storage space 276. Cooling heat of the heat absorber 274 is stirred by the unshown air feeder so as to circulate inside the storage space 276 as indicated by dashed arrows in FIG. 4. In this manner, the inside of the storage space 276 is cooled.

As described above in Embodiment 1, the refrigerant compressor 100 included in the refrigerant circuit 270 satisfies the following conditions (1) and (2). The condition (1) is that the lubricating oil 103 has a kinematic viscosity in the range of 1 mm²/S to 7 mm²/S at 40°C, has a mass average molecular weight in the range of 150 to 400, and contains 0.5% by mass or more of a high molecular weight component whose mass molecular weight is greater than or equal to 500. The condition (2) is that the ratio L / D of the single sliding length L to the external diameter D of the shaft part is less than or equal to 2.0. Preferably, the refrigerant compressor 100 further satisfies the condition (3) that the lubricating oil 103 contains an ester-based oily agent. Consequently, high efficiency of the refrigerant compressor 100 can be achieved, and the reliability of the refrigerant compressor 100 can be further improved.

As described above, the refrigerator-freezer according to Embodiment 2 includes the above-described refrigerant compressor 100 according to Embodiment 1. In the refrigerant compressor 100, the low-viscosity lubricating oil 103 is used; the sliding area of the shaft slide part is reduced; and the shaft part has favorable reliability. Since the refrigerator-freezer includes the hermetic refrigerant compressor, which is highly efficient and has favorable reliability, the power consumption of the refrigerator-freezer can be reduced, and also, the refrigerator-freezer can be made highly reliable.

### Examples

Hereinafter, a more specific description of the present invention is given based on Examples and Comparative Examples. However, the present invention is not limited by the description below. A person skilled in the art can change, modify, or alter the present invention in various ways without departing the scope of the present invention.

### (Lubricating Oil and Refrigerant Compressor)

In the Examples described below, mineral oil having a kinematic viscosity of 2.7 mm²/S at 40°C was used as the lubricating oil 103 (hereinafter "the lubricating oil 103 of Example"), which is low-viscosity oil containing a high molecular weight component whose mass molecular weight is greater than or equal to 500. In the Examples except Example 3, the mineral oil used as the lubricating oil 103 of Example contains 2.0% by mass of the high molecular weight component. It should be noted that, in the lubricating oil 103 of Example, each of the principal component and the high molecular weight component is mineral oil.

In the Examples and Comparative Examples described below, a reciprocating compressor (product name TKD91E manufactured by Panasonic Corporation) was used as the refrigerant compressor 100.

### (Example 1)

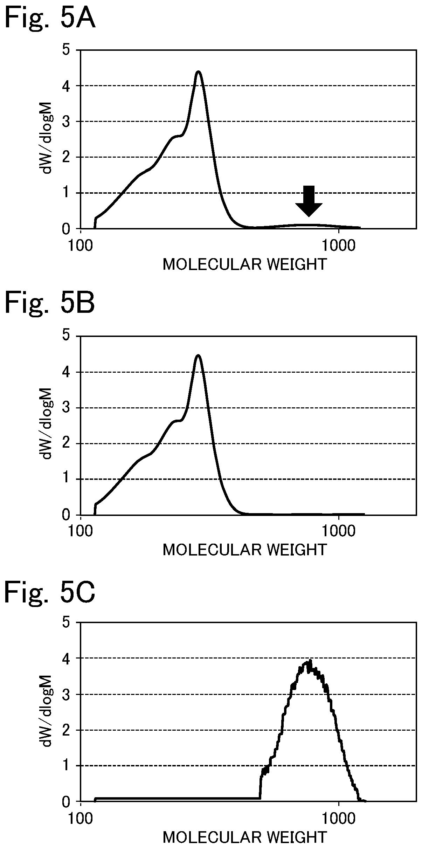

The molecular weight distribution of the lubricating oil 103 of Example was measured by GPC technique. The results are shown in FIG. 5A. It should be noted that in the molecular weight distribution graph of FIG. 5A, the vertical axis represents differential molar mass distribution (dW / dlogM) and the horizontal axis represents mass molecular weight. The GPC technique was performed under the following conditions: a differential refractive index detector RI was used as a detector; a column having a diameter of 6.0 mm and a length of 15 cm was used; tetrahydrofuran (THF) was used as a solvent; monodispersed polystyrene was used as a standard sample; a flow velocity was set to 0.45 mL/min; and a column temperature was set to 40°C.

### (Comparative Example 1)

The molecular weight distribution of conventional lubricating oil (trade name FREOL S3 manufactured by JXTG Nippon Oil & Energy Corporation) was measured by GPC technique in the same manner as Example 1. The results are shown in FIG. 5B. Similar to FIG. 5A, also in the molecular weight distribution graph of FIG. 5B, the vertical axis represents differential molar mass distribution (dW / dlogM) and the horizontal axis represents mass molecular weight.

### (Comparative Example 2)

The molecular weight distribution of only the high molecular weight component contained in the lubricating oil 103 of Example was measured by GPC technique in the same manner as Example 1. The results are shown in FIG. 5C. Similar to FIG. 5A, also in the molecular weight distribution graph of FIG. 5C, the vertical axis represents differential molar mass distribution (dW / dlogM) and the horizontal axis represents mass molecular weight.

### (Example 2)

In the refrigerant compressor 100, the lubricating oil 103 of Example (see Example 1) was used, and the ratio L / D of the crankshaft 108 was changed over the range of 0.3 to 2.5. The frictional coefficient of the slide part was evaluated. The evaluation results are indicated by a solid line in FIG. 6. In the graph of FIG. 6, the vertical axis represents the frictional coefficient and the horizontal axis represents the ratio L / D. The frictional coefficient of the slide part of the crankshaft 108 was measured by friction force measurement technique using a load cell.

### (Comparative Example 3)

In the refrigerant compressor 100, the conventional lubricating oil (see Comparative Example 1) was used, and the ratio L / D of the crankshaft 108 was changed over the range of 0.3 to 2.5. The frictional coefficient of the slide part was evaluated. The evaluation results are indicated by a dashed line in FIG. 6.

### (Example 3)

The content of the high molecular weight component in the lubricating oil 103 of Example was changed over the range of 0% by mass to about 8% by mass, and the coefficient of performance of the refrigerant compressor 100 was evaluated. The evaluation results are shown in FIG. 7. In the graph of FIG. 7, the vertical axis represents the coefficient of performance, and the horizontal axis represents the content of the high molecular weight component. The coefficient of performance (COP) is the ratio of refrigeration capacity to energy consumption (input) (i.e., refrigeration capacity / input).

### (Comparison between Examples and Comparative Examples)

It is clear from the comparison of FIG. 5A to FIG. 5C that, as indicated by a block arrow in FIG. 5A, the lubricating oil 103 of Example contains 0.5% by mass or less of the high molecular weight component corresponding to FIG. 5C, whereas the conventional lubricating oil does not contain the high molecular weight component.

In the refrigerant compressor 100 in which the lubricating oil 103 of Example is used, as indicated by the solid line in FIG. 6, a favorable frictional coefficient can be achieved when the ratio L / D is in the range of less than or equal to 2.0. On the other hand, in the refrigerant compressor 100 in which the conventional lubricating oil is used, as indicated by the dashed line in FIG. 6, the overall frictional coefficient is higher than in the case where the lubricating oil 103 of Example is used, regardless of changes in the ratio L / D. In other words, in the refrigerant compressor 100 in which the lubricating oil 103 of Example is used, the frictional coefficient can be reduced compared to the case where the conventional lubricating oil is used. It is understood that particularly under the condition that the ratio L / D is less than or equal to 2.0 (i.e., the condition that the sliding area is reduced), the frictional coefficient of the slide part can be reduced.

In the refrigerant compressor 100 in which the lubricating oil 103 of Example is used, it is understood from FIG. 7 that the coefficient of performance can be favorably reduced by containing at least 0.5% by mass of the high molecular weight component in the lubricating oil 103.

As described above, the hermetic refrigerant compressor according to the present disclosure includes a sealed container in which lubricating oil is stored, the sealed container accommodating an electric element and a compression element, the compression element being driven by the electric element and configured to compress a refrigerant. The lubricating oil has a kinematic viscosity in a range of 1 mm²/S to 7 mm²/S at 40°C, has a mass average molecular weight in a range of 150 to 400, and contains 0.5% by mass or more of a high molecular weight component. The high molecular weight component has a mass molecular weight of greater than or equal to 500. The compression element includes: a shaft part that is a crankshaft including a main shaft and an eccentric shaft; and a bearing part that pivotally supports the shaft part, the bearing part including a main bearing and an eccentric bearing, the main bearing pivotally supporting the main shaft, the eccentric bearing pivotally supporting the eccentric shaft. The main shaft includes a sliding surface that slides on the main bearing, the sliding surface bein divided into a plurality of sliding surfaces. A length of one of the sliding surfaces in the axial direction, the one sliding surface having a least length in the axial direction among the plurality of sliding surfaces, is the single sliding length L. A ratio L / D of the single sliding length L to an external diameter D of the main shaft is less than or equal to 2.0.

According to the above configuration, the ratio L / D of the single sliding length L to the external diameter D is less than or equal to 2.0 regardless of whether the sliding surface of the main shaft of the crankshaft is a single sliding surface or a plurality of sliding surfaces, and also, even though the lubricating oil used in the hermetic refrigerant compressor has a reduced viscosity, the average molecular weight of the lubricating oil is within a predetermined range, and the lubricating oil contains 0.5% by mass or more of the high molecular weight component whose molecular weight is relatively great. Accordingly, even though the sliding area is reduced such that the ratio L / D is less than or equal to 2.0 and an oil film is formed by the low-viscosity lubricating oil, the oil film can be favorably formed owing to the high molecular weight component. As a result, even with the use of the lubricating oil having a reduced viscosity and the use of the bearing part having a reduced sliding area, the frictional coefficient of the shaft part pivotally supported by the bearing part can be reduced. Consequently, friction at the slide part of the crankshaft can be reduced favorably, which makes it possible to achieve high efficiency and favorable reliability of the hermetic refrigerant compressor.

From the foregoing description, numerous modifications and other embodiments of the present invention are obvious to those skilled in the art. Accordingly, the foregoing description is to be construed as illustrative only, and is provided for the purpose of teaching those skilled in the art the best mode for carrying out the present invention.

It should be noted that the present invention is not limited to the embodiments described above, and various modifications can be made within the scope of the claims. Embodiments obtained by suitably combining technical means that are disclosed in different embodiments and variations also fall within the technical scope of the present invention insofar as they fall within the scope of the appended claims.

### Industrial Applicability

As described above, the present invention makes it possible to provide a highly efficient refrigerant compressor that uses low-viscosity lubricating oil and yet has excellent reliability and to provide a refrigerator-freezer using the refrigerant compressor. Therefore, the present invention is widely applicable to various equipment that uses a refrigeration cycle.

### Reference Signs List

100: refrigerant compressor
101: sealed container
103: lubricating oil
106: electric element
107: compression element
108: crankshaft
109: main shaft (shaft part)
110: eccentric shaft (shaft part)
111: single sliding surface
111a: first sliding surface
111b: second sliding surface
111c: non-sliding outer peripheral surface
111d: first sliding surface
111e: second sliding surface
111f: third sliding surface
111g: first non-sliding outer peripheral surface
111h: second non-sliding outer peripheral surface
112: cylinder block
114: main bearing (bearing part)
119: eccentric bearing (bearing part)
270: refrigerant circuit
272: radiator
273: decompressor
274: heat absorber

## Claims

1. A hermetic refrigerant compressor (100) comprising a sealed container (101) in which lubricating oil (103) is stored, the sealed container (101) accommodating an electric element (106) and a compression element (107), the compression element (107) being driven by the electric element (106) and configured to compress a refrigerant, wherein
the lubricating oil (103) has a kinematic viscosity in a range of 1 mm²/S to 7 mm²/S at 40°C, has a mass average molecular weight in a range of 150 to 400, and contains 0.5% by mass or more of a high molecular weight component,
the high molecular weight component has a mass molecular weight of greater than or equal to 500,
the compression element (107) includes:
a shaft part that is a crankshaft (108) including a main shaft (109) and an eccentric shaft (110); and
a bearing part that pivotally supports the shaft part, the bearing part including a main bearing (114) and an eccentric bearing (119), the main bearing (114) pivotally supporting the main shaft (109), the eccentric bearing (119) pivotally supporting the eccentric shaft (110),
the main shaft (109) includes a sliding surface that slides on the main bearing (114), the sliding surface being divided into a plurality of sliding surfaces,
wherein a length of one of the sliding surfaces in the axial direction, the one sliding surface having a least length in the axial direction among the plurality of sliding surfaces, is the single sliding length L, and
a ratio L / D of the single sliding length L to an external diameter D of the main shaft is less than or equal to 2.0.

2. The hermetic refrigerant compressor (100) according to claim 1, wherein the ratio L / D is greater than or equal to 0.4.

3. The hermetic refrigerant compressor (100) according to claim 1 or 2, wherein the lubricating oil (103) contains an oily agent.

4. The hermetic refrigerant compressor (100) according to claim 3, wherein the oily agent is an ester-based compound.

5. The hermetic refrigerant compressor (100) according to any one of claims 1 to 4, wherein a distillation fraction of the lubricating oil (103) at a distillation temperature of 300°C is 0.1% or greater, and a distillation end point is 440°C or higher.

6. The hermetic refrigerant compressor (100) according to any one of claims 1 to 5, wherein the lubricating oil (103) contains a sliding modifier such that a content of the sliding modifier in the lubricating oil (103) in terms of an atomic weight of sulfur is greater than or equal to 100 ppm.

7. The hermetic refrigerant compressor (100) according to any one of claims 1 to 6, wherein the lubricating oil (103) contains a phosphorus-based extreme-pressure additive.

8. The hermetic refrigerant compressor (100) according to any one of claims 1 to 7, wherein the lubricating oil (103) is at least one selected from the group consisting of mineral oil, alkyl benzene oil, and ester oil.

9. The hermetic refrigerant compressor (100) according to any one of claims 1 to 8, wherein the electric element (106) is inverter-driven at a plurality of operating frequencies.

10. A refrigerator-freezer comprising a refrigerant circuit including:
the hermetic refrigerant compressor (100) according to any one of claims 1 to 9;
a radiator;
a decompressor; and
a heat absorber, wherein
in the refrigerant circuit, the hermetic refrigerant compressor (100), the radiator, the decompressor, and the heat absorber are connected by piping in an annular manner.

## Patentansprüche

1. Hermetischer Kältemittelverdichter (100), umfassend einen dicht verschlossenen Behälter (101), in dem Schmieröl (103) gelagert ist, wobei der dicht verschlossene Behälter (101) ein elektrisches Element (106) und ein Kompressionselement (107) aufnimmt, wobei das Kompressionselement (107) durch das elektrische Element (106) angetrieben wird und konfiguriert ist, um ein Kältemittel zu komprimieren, wobei
das Schmieröl (103) eine kinematische Viskosität in einem Bereich von 1 mm²/s bis 7 mm²/s bei 40 °C aufweist, ein gewichtsmittleres Molekulargewicht in einem Bereich von 150 bis 400 aufweist, und 0,5 Gew.-% oder mehr einer Komponente mit hohem Molekulargewicht enthält,
die Komponente mit hohem Molekulargewicht ein gewichtsbezogenes Molekulargewicht von größer oder gleich 500 aufweist,
das Kompressionselement (107) Folgendes einschließt:
ein Wellenteil, das eine Kurbelwelle (108) ist, die eine Hauptwelle (109) und eine Exzenterwelle (110) einschließt; und
ein Lagerteil, das das Wellenteil schwenkbar stützt, wobei das Lagerteil ein Hauptlager (114) und ein Exzenterlager (119) einschließt, wobei das Hauptlager (114) die Hauptwelle (109) schwenkbar stützt, wobei das Exzenterlager (119) die Exzenterwelle (110) schwenkbar stützt,
die Hauptwelle (109) eine Gleitfläche einschließt, die auf dem Hauptlager (114) gleitet, wobei die Gleitfläche in eine Vielzahl von Gleitflächen unterteilt ist,
wobei eine Länge von einer der Gleitflächen in der axialen Richtung, wobei die eine Gleitfläche eine geringste Länge in der axialen Richtung unter der Vielzahl von Gleitflächen aufweist, die einzelne Gleitlänge L ist, und
ein Verhältnis L/D der einzelnen Gleitlänge L zu einem Außendurchmesser D der Hauptwelle kleiner oder gleich 2,0 ist.

2. Hermetischer Kältemittelverdichter (100) nach Anspruch 1, wobei das Verhältnis L/D größer oder gleich 0,4 ist.

3. Hermetischer Kältemittelverdichter (100) nach Anspruch 1 oder 2, wobei das Schmieröl (103) ein öliges Mittel enthält.

4. Hermetischer Kältemittelverdichter (100) nach Anspruch 3, wobei das ölige Mittel eine Verbindung auf Esterbasis ist.

5. Hermetischer Kältemittelverdichter (100) nach einem der Ansprüche 1 bis 4, wobei eine Destillationsfraktion des Schmieröls (103) bei einer Destillationstemperatur von 300 °C 0,1 % oder mehr beträgt, und ein Destillationsendpunkt 440 °C oder höher ist.

6. Hermetischer Kältemittelverdichter (100) nach einem der Ansprüche 1 bis 5, wobei das Schmieröl (103) einen Gleitmodifikator enthält, sodass ein Gehalt an dem Gleitmodifikator im Schmieröl (103) in Bezug auf das Atomgewicht von Schwefel größer oder gleich 100 ppm ist.

7. Hermetischer Kältemittelverdichter (100) nach einem der Ansprüche 1 bis 6, wobei das Schmieröl (103) einen Zusatzstoff für extreme Drücke auf Phosphorbasis enthält.

8. Hermetischer Kältemittelverdichter (100) nach einem der Ansprüche 1 bis 7, wobei das Schmieröl (103) mindestens eines ist, das aus der Gruppe ausgewählt ist, die aus Mineralöl, Alkylbenzolöl und Esteröl besteht.

9. Hermetischer Kältemittelverdichter (100) nach einem der Ansprüche 1 bis 8, wobei das elektrische Element (106) bei einer Vielzahl von Betriebsfrequenzen wechselrichtergesteuert ist.

10. Kühl-Gefriergerät, umfassend einen Kältemittelkreislauf, Folgendes einschließend:
den hermetischen Kältemittelverdichter (100) nach einem der Ansprüche 1 bis 9;
einen Kühler,
einen Dekompressor; und
einen Wärmeabsorber, wobei
im Kältemittelkreislauf, der hermetische Kältemittelverdichter (100), der Kühler, der Dekompressor und der Wärmeabsorber durch Rohrleitungen in ringförmiger Weise miteinander verbunden sind.

## Revendications

1. Compresseur hermétique de fluide frigorigène (100) comprenant un récipient étanche (101) dans lequel de l'huile lubrifiante (103) est stockée, le récipient étanche (101) logeant un élément électrique (106) et un élément de compression (107), l'élément de compression (107) était entraîné par l'élément électrique (106) et configuré pour comprimer un fluide frigorigène, dans lequel
l'huile lubrifiante (103) a une viscosité cinématique de 1 mm²/s à 7 mm²/s à 40 °C, a un poids moléculaire moyen en masse dans une plage de 150 à 400, et contient 0,5 % en masse ou plus d'un constituant à haut poids moléculaire,
le constituant à haut poids moléculaire a un poids moléculaire en masse supérieur ou égal à 500,
l'élément de compression (107) inclut :
une partie d'arbre qui est un vilebrequin (108) incluant un arbre principal (109) et un arbre excentrique (110) ; et
une partie de palier qui supporte de façon pivotante la partie d'arbre, la partie de palier incluant un palier principal (114) et un palier excentrique (119), le palier principal (114) supportant de manière pivotante l'arbre principal (109), le palier excentrique (119) supportant de manière pivotante l'arbre excentrique (110),
l'arbre principal (109) inclut une surface glissante qui glisse sur le palier principal (114), la surface glissante étant divisée en une pluralité de surfaces glissantes,
dans lequel une longueur de l'une des surfaces glissantes dans la direction axiale, ladite surface glissante ayant une longueur la plus petite dans la direction axiale parmi la pluralité de surfaces glissantes, est la longueur de glissement simple L, et
un rapport L/D entre la longueur de glissement simple L et un diamètre extérieur D de l'arbre principal est inférieur ou égal à 2,0.

2. Compresseur hermétique de fluide frigorigène (100) selon la revendication 1, dans lequel le rapport L/D est supérieur ou égal à 0,4.

3. Compresseur hermétique de fluide frigorigène (100) selon la revendication 1 ou 2, dans lequel l'huile lubrifiante (103) contient un agent huileux.

4. Compresseur hermétique de fluide frigorigène (100) selon la revendication 3, dans lequel l'agent huileux est un composé à base d'un ester.

5. Compresseur hermétique de fluide frigorigène (100) selon l'une quelconque des revendications 1 à 4, dans lequel une fraction de distillation de l'huile lubrifiante (103) à une température de distillation de 300 °C est de 0,1 % ou plus, et un point final de distillation est égal de 440 °C ou plus.

6. Compresseur hermétique de fluide frigorigène (100) selon l'une quelconque des revendications 1 à 5, dans lequel l'huile lubrifiante (103) contient un modificateur de glissement de sorte qu'une teneur en modificateur de glissement dans l'huile lubrifiante (103) en termes de poids atomique de soufre est supérieure ou égale à 100 ppm.

7. Compresseur hermétique de fluide frigorigène (100) selon l'une quelconque des revendications 1 à 6, dans lequel l'huile lubrifiante (103) contient un additif extrême-pression à base de phosphore.

8. Compresseur hermétique de fluide frigorigène (100) selon l'une quelconque des revendications 1 à 7, dans lequel l'huile lubrifiante (103) est au moins une huile sélectionnée dans le groupe constitué d'une huile minérale, d'une huile d'alkylbenzène et d'une huile d'ester.

9. Compresseur hermétique de fluide frigorigène (100) selon l'une quelconque des revendications 1 à 8, dans lequel l'élément électrique (106) est entraîné par un onduleur à une pluralité de fréquences de fonctionnement.

10. Appareil de réfrigération/congélation comprenant un circuit de fluide frigorigène incluant :
le compresseur hermétique de fluide frigorigène (100) selon l'une quelconque des revendications 1 à 9,
un radiateur ;
un décompresseur ; et
un absorbeur de chaleur, dans lequel
dans le circuit de fluide frigorigène, le compresseur hermétique de fluide frigorigène (100), le radiateur, le décompresseur et l'absorbeur de chaleur sont connectées de manière annulaire par des tuyaux.
